# EUROPEAN PATENT APPLICATION

(11) **EP 2 720 434 A1**
(43) Date of publication of application: **16.04.2014**
(21) Application number: 12461550.1
(22) Date of filing: 15.10.2012
(51) Int. Cl.: H04L 29/08, G06F 17/30, H04L 12/28

(54) **Method for devices adressing within a network**

(71) Applicant: Uniwersytet Ekonomiczny W Poznaniu, 61-875 Poznan (PL)
(72) Inventor: Rykowski, Jarogniew, 61-875 Poznan (PL)
(74) Representative: Pawlowski, Adam

(57) **Abstract**

A method for devices addressing within a network, that comprises the steps of defining capabilities of a target device, being the actions the device is able to execute, as a functions ontology; defining objects of real world, on which the actions according to capabilities may be executed, as an objects ontology; assigning the objects and the capabilities to the target device; registering the capabilities at a main server; generating a request by a requesting device, wherein the request defines an object and an action to be executed on the object; generating context information to be included as a part of the request; transmitting the request to the main server; analyzing, at the main server, whether the request matches the registered device capabilities and is in line with the context; in case of a match, invoking the target device fulfilling the request.

## Description

The present invention relates to a method for devices addressing within a network with a use of a context and an ontology. This is especially applicable to the concept of Internet of Things.

The Internet of Things refers to uniquely identifiable objects (things) and their virtual representations in an Internet-like structure. The term Internet of Things was first used by Kevin Ashton in 1999 (Kevin Ashton: That 'Internet of Things' Thing. In: RFID Journal, 22 July 2009).

Ontology is the philosophical study of the nature of being, existence, or reality, as well as the basic categories of being and their relations. In the scope of computer science, ontologies formally represent knowledge as a set of concepts within a domain, and the relationships among those concepts. It can be used to reason about the entities within that domain and may be used to describe the domain [Wikipedia]. In theory, an ontology is a "formal, explicit specification of a shared conceptualisation" [Gruber, Thomas R. (June 1993). "A translation approach to portable ontology specifications". Knowledge Acquisition 5 (2): 199-220] An ontology renders shared vocabulary and taxonomy which models a domain with the definition of objects and/or concepts and their properties and relations.

In prior art systems in order to receive or send data from or to a device connected to the Internet network, there has to be an a'priori known address (for example a name or an identifier) of a network device. In Open Systems Interconnection (OSI) model (ISO/IEC 7498-1) model, nodes of the Internet network are located based on the following:
In application layer - on DNS or NetBIOS; names are interpreted by a service of DNS (Domain Name Service) and its specialized servers accessible via the network. The application layer is the OSI layer closest to the end user, which means that both the OSI application layer and the user interact directly with the software application;

In network layer - on IP addresses and socket numbers (ports); IP datagrams are translated in the transport layer to TCP or UDP packets and transmitted to appropriate port of an addressable network node. The network layer provides the functional and procedural means of transferring variable length data sequences from a source host on one network to a destination host on a different network, while maintaining the quality of service requested by the transport layer. The network layer performs network routing functions and report delivery errors. Routers operate at this layer, sending data throughout the extended network and making the Internet possible;

In data link layer - on MAC (Media Access Control) addresses - 48 - bit - long physical addresses of the network device. MAC addresses are assigned at production stage and are to be unique within the whole Internet.

DNS, TCP/IP and MAC addressing is standardized by RFC documents such as: RFC 917 "Internet subnets", 1984; standards of IP subnets addressing and routing within subnets; RFC 952 "DoD Internet host table specification": standards for naming and computers names representation; RFC 1166 "Internet Numbers", 1990: rules of IP addressing (classes and reserved addresses); RFC 1918 "Address Allocation for Private Internets": addressing rules for private networks and public networks.

Prior art also discloses other network arrangements using devices addressing. In industrial automation networks, addressing of devices may be implemented by means of two common methods.

The first method is a selection of a given device based on location of its connection (star topology and dedicated connections between devices). Typically, such addressing requires use of intermediary devices (routers), connected to the Internet network and routing data from/to end devices.

The second method is use of bus architecture and hardware selection of a physical address of a device connected to the bus. The address of the device is either set by its manufacturer (for example in 1-Wire technology), hardcoded into a controller (a microprocessor controller of the device) or selected by the end user for example with a use of micro-switches located inside the device.

Therefore, similarly as in the Internet network, also in case of industrial automation networks, an address of a device must be known upfront in order to establish a connection.

Another type of addressing is a broadcast, message based transmission with a use of Controller Area Network (CAN), developed in the 80s of XX century. CAN bus is a vehicle communication bus standard designed to allow microcontrollers and devices to communicate with each other within a vehicle without a host computer.

In CAN bus, the designers have resigned from direct addressing of devices connected to the bus. All data are transmitted in broadcast mode, and an interest in the data (cooperation) is shown by devices based on the content of the received data (whether the data are destined for them). CAN is a multi-master broadcast serial bus standard for connecting electronic control units (ECUs). The CAN bus was designed for vehicle circuits control and is used in this character also nowadays.

Although, in this type of transmission, physical addressing of network nodes is not used and transmission interpretation is made based on analysis of incoming data, it is not a full semantic addressing. The CAN bus devices need to have hardcoded reactions to selected types of incoming messages. Therefore despite seemingly dynamic character it is still a static addressing whereas the system as such is easily adaptable and upgradeable.

The prior art also discloses a semantic Internet (or more broadly semantic Web) and its associated addressing. This concept was initiated by Tim Berners-Lee (creator of the World Wide Web), and uses available Internet technologies, including its addressing protocols, for representation and transmission of information in a method dependent on its semantics (meaning).

The Semantic Web is a collaborative movement led by the international standards body, the World Wide Web Consortium (W3C). The standard promotes common data formats on the World Wide Web.

Semantics of data is represented by so called meta-data that are data describing other data. Semantics is also interpreted within a given context, allowing for accessing the data, which location is not known a'priori.

Thanks to such an arrangement, data having the same or similar meaning, scattered in network nodes, may be connected in order to form a complete set, remaining physically distributed and mutually differentiated.

The semantic web, in its base assumptions, addresses information, not nodes (devices) of the network. Nevertheless although ontology and context is widely used, still address-less contact is not possible with devices of Internet Of Things.

Additionally there are structural limitations to address network nodes and network resources. As discussed above in all network arrangements the nodes are addressed statically with a use of unique, pre-assigned identifiers. In order to address a given device, one must know a'priori the other device's address in the network system.

Such addressing method does not allow for ad-hoc data exchange among devices, which do not 'know' each other and at the beginning have no information about each other irrespective of the fact that they may be present at the same location and may be used for similar purposes (mutually completing, complementary).

Therefore, as can be readily seen, enhancements of Controller Area Network bus principles and Semantic Web principles in a direction of dynamic, using semantic descriptions, addressing of devices of Internet of Things would be very beneficial.

The aim of the present invention is to alleviate the aforementioned drawbacks of the prior art and present a method and a system, which will be cost-effective and will be easily applicable to Semantic Web principles and fit ad-hoc interaction requirements.

The object of the invention is fulfilled with a method for devices addressing within a network, the method comprising the steps of defining capabilities of a target device, being the actions the device is able to execute, as a functions ontology; defining objects of real world, on which the actions according to capabilities may be executed, as an objects ontology; assigning the objects and the capabilities to the target device; registering the capabilities at a main server; generating a request by a requesting device, wherein the request defines an object and an action to be executed on the object; generating context information to be included as a part of the request; transmitting the request to the main server; analyzing, at the main server, whether the request matches the registered device capabilities and is in line with the context; in case of a match, invoking the target device fulfilling the request.

Preferably, the functions ontology comprises functions selected from a group of open, close, lock, unlock, run, execute, start, stop, increase, decrease.

In one embodiment the context information comprises information selected from a group of location, time, date, ping time, temperature, pressure, humidity.

Preferably, the main server, the target device and the requesting device run a REST server software for controlling the operation of the respective devices.

Preferably, the step of registering the capabilities at a main server comprises storing in a database, accessible by the main server, data regarding capabilities of the target device, identification of objects on which the capabilities are executed and a call address.

In one embodiment, the call address is a URL address of a REST server, which is responsible for the execution of the capability whereas the URL address is registered by the target device.

Preferably, the exchange of data between the main server, the target device and the requesting device is effected by means of XML files.

Another object of the present invention is a computer program comprising program code means for performing all the steps of the computer-implemented devices addressing method according to the present invention when said program is run on a computer.

Yet another object of the present invention is a computer readable medium storing computer-executable instructions performing all the steps of the computer-implemented devices addressing method according to the present invention when executed on a computer.

A further object of the present invention is a method for operating a server for devices addressing within a network, the method comprising the steps of receiving from a target device a request for registration at the server; registering the capabilities at the server wherein the request for registration comprises; defining capabilities of a target device that requests registration, being the actions the device is able to execute, as a functions ontology; defining objects of real world, on which the actions according to capabilities may be executed by the target device, as an objects ontology; receiving a request from a requesting device, wherein the request defines an object and an action to be executed on the object as well as it defines context information included as a part of the request; analyzing, at the server, whether the request matches the registered device capabilities and is in line with the context; in case of a match, invoking the target device fulfilling the request.

Preferably, the server runs a REST server software for controlling the operation of the server.

Preferably, the step of registering the capabilities at a server comprises storing in a database, accessible by the server, data regarding capabilities of the target device, identification of objects on which the capabilities are executed and a call address.

Preferably, the call address is a URL address of a REST server, which is responsible for the execution of the capability whereas the URL address is registered by the target device.

Another object of the present invention is a computer program comprising program code means for performing all the steps of the computer-implemented method for operating the server according to the present invention when said program is run on a computer.

Yet another object of the present invention is a computer readable medium storing computer-executable instructions performing all the steps of the computer-implemented method for operating the server according to the present invention when executed on a computer.

These and other objects of the invention presented herein are accomplished by providing an improved system and method for traffic telemetry. Further details and features of the invention, its nature and various advantages will become more apparent from the following detailed description of the preferred embodiments shown in a drawing, in which:

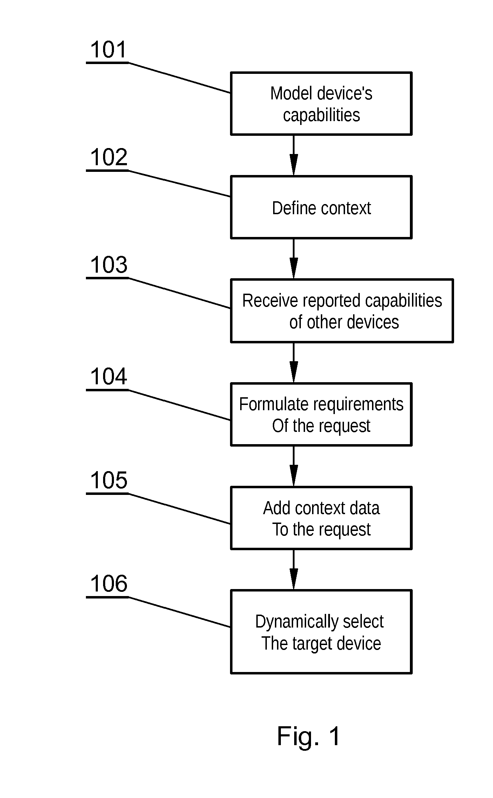

FIG. 1 presents a general overview of the method according to the present invention;
FIG. 2 shows a representation of devices ontology;
FIG. 3 shows a representation of functions ontology;
FIG. 4 depicts an example of dynamic addressing of an ontologically described device;
FIG. 5 presents a schematic diagram of the system according to the present invention; and
FIG. 6 presents a schematic diagram of another embodiment of the method according to the present invention.

The present invention utilizes context and ontology description for dynamic addressing of devices. The solution is especially dedicated to ad-hoc connections of Internet of Things devices. According to the solution there are ontologically modeled capabilities of devices 101. These are descriptions of actions the devices are able to execute. Additionally there is ontologically modeled context 102, being the situation, in which currently the device finds itself in (e.g., a location, date, time, ping time, date and/or environmental parameters such as a temperature, pressure, humidity etc.), and the incoming requests 104 of activating devices. Before requests are processed, all devices register their capabilities 103 at a server. By means of a comparison of definition of request's ontology, the context of the call and capabilities of devices identified by the context 105, a device may be dynamically selected (addressed) 106 that will respond to the request.

The basis for context representation and selection of devices according to requests of the users is an appropriately defined ontology modeling requests together with the context of their presence. The ontology means, in a general system sense, a description of what "is", "may be" in a given reality portion. The modeling of capabilities concerns both real devices as well as virtual devices (complex devices such as groups of various devices being treated as a single device at the level of addressing). The capabilities are not modeled at the level of device's characteristics (technical data, connection, address etc.) but at the level of functions the given device is assigned to execute.

The second element taken into account is the context, which is used to model a situation. From a system's point of view, the context is a range of request parameters, which are not explicitly specified by a requester (that may be a person or a device), but are a result of unique properties of the request such as time and place of the request and similar parameters. The parameters of the context may not be altered, they are always determined automatically during handling of the incoming request.

The last ontologically modeled element are requirements reported by persons or other devices, wherein the requirements are part of a request of addressing appropriate device and therefore execution of appropriate final response.

The utilized ontological model allows to formulate requirements and a request with subsequent reporting of the request. Next there are added requirements arising from the context and lastly a dynamic selection of devices or groups of devices that, based on previously declared capabilities, may fulfill the requirements. Such devices or groups of devices are subsequently activated, which results in an execution of the requested action.

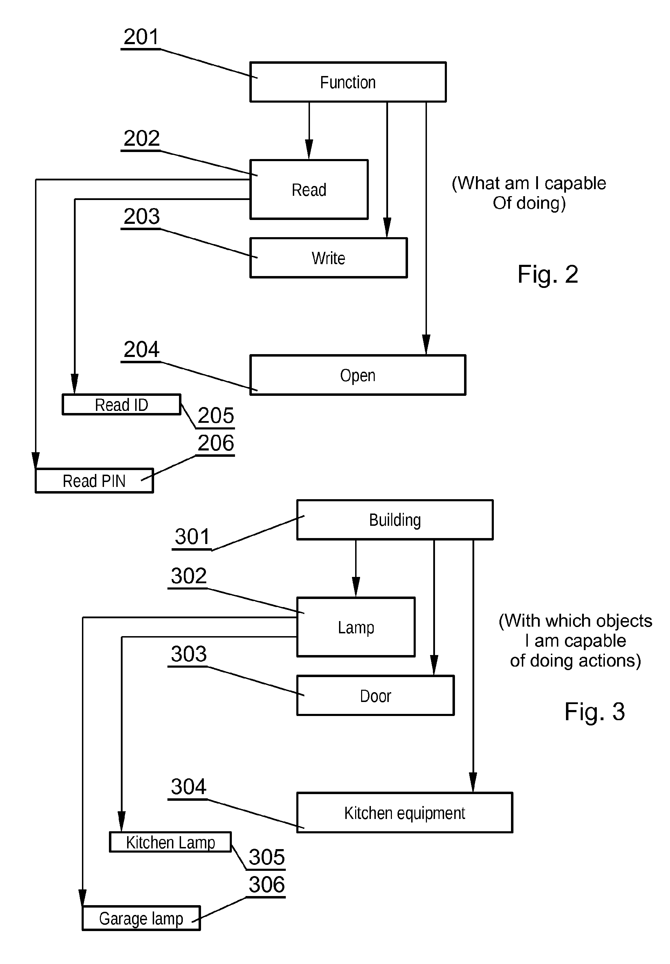

As shown in Fig. 2, representation of devices ontology is effected and represented by means of two acyclic and directional (hierarchies) representing actions 201- 206 that may be executed or has to be executed by a given device (so called function ontology) and, as shown in Fig. 3, real world objects (such as awindow, doors etc.) over which such action is to be performed (so called objects ontology - 301- 306).

The system assumes that requirements and requests are analyzed according to their compatibility or match. The analysis of requirements and requests is based on processing of both aforementioned hierarchies in the order from the graph's leaves to its root, whereas the requirements and requests are considered as matching if there exist common, non-empty sections (sub-graphs) of both hierarchies.

It has to be noted that such approach eliminates the aforementioned static addressing of devices because a request is always dynamically associated with an appropriate device according to a given context irrespective of its location at which such request may be fulfilled. Further, a request is always the same irrespective of the location at which it is executed, which allows dynamic change of location without a need of advance programming of such request and its processing at all possible locations where it can be used. In such a way there has been provided a complex fulfillment of the targets of the present invention.

In the system according to the present invention there are not any addresses as every communication is dynamic. Let's consider an example of a room having a light source, a door and a temperature sensor. A device associated with the lamp is described with the following semantics: capabilities - *switch on, switch off*. A device associated with the door is described with the following semantics: capabilities - *open, close, lock, unlock.* A device associated with the temperature sensor is described with the following semantics: capabilities - *read temperature, reset* device. It will be evident fro a person skilled in the art that the capabilities and the functions semantics depends on the device and the functions semantics in other embodiments may comprise functions such as run, execute, start, stop, increase, decrease, rotate, angle or similar.

Formulation of activation requests is effected by means of definition such as "do" in relation to an object, for example "do - lamp - switch on". Requests of "do" type are compared to capabilities for a given context (in the present example the context concerns a location of the selected room, but it may also be an authorization level, for example director, manager, assistant, guest etc.). Hence if one needs to switch the lamp on, the lamp will be found and activated.

Additionally, the device itself decides how it shall be activated. This is effected by means of registering a WWW address that activates it (prior definition of capabilities influences activation request). Thus, anyone / anything except the device itself does not know how to activate it. Nevertheless, any person / device may activate it by providing the "do" request sent to all devices, to which specific device(s) will respond.

In the example explained above, a request "do - door - switch on" or "door - on" will not activate anything since there is not any device that has declared this capability.

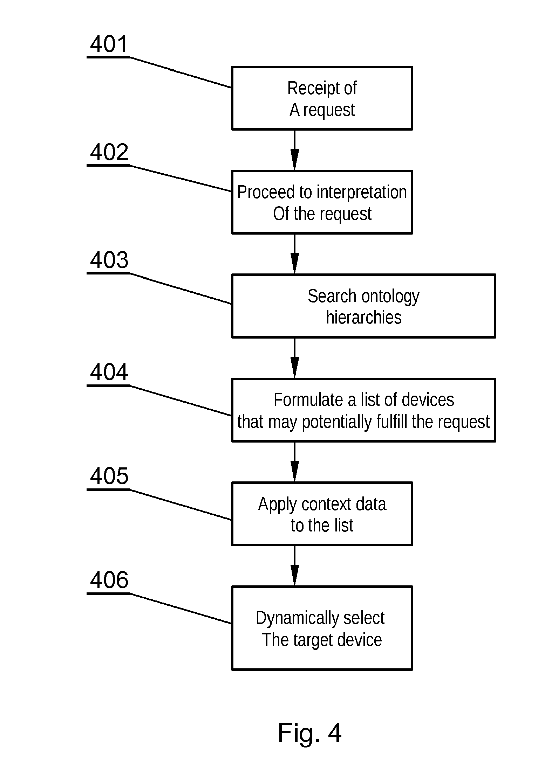

The following section of the specification provides a description of dynamic addressing of an ontologically described device. This has been depicted in Fig. 4. The system may receive requests for addressing (calls) the devices. As previously explained, a request may be received 401 from a person, typically by means of the person's own device or may be received from a device (caused by an even such as a movement sensor that has detected an entry of a person to a room). After reception of the request (that is a definition of what needs to be done), the request is interpreted 402.

In the first phase ontology hierarchies are searched 403. A result of the searching is a list of devices that may potentially fulfill the request 404. Previously the devices have declared what are their capabilities (*What I am, what I am capable of doing*).

In the second phase the context is taken into account 405. For example, in case the context includes information regarding a location, there are devices removed from the list that are not present in the given location. Such a narrowed list is the final result of the search. The devices present on the list are activated 406 in a sequence or one device is selected (depending on the situation and/or user's preferences defined within the context).

Activation of a device results in an execution of the functions associated with the processing of the request (in response to the request that defines the action - the device responds to a question: "what do I need to do"). It is to be noted that devices, activated by the above process, may at a time of activation present their own requests of activation of other devices (which is to some extent an equivalent of invoking functions in a typical programming language such as Java).

The solution presented above has a number of advantages. Ontological and coherent modeling of devices' capabilities, and context and semantics of the incoming requests for device activation (i.e. using functions offered by such devices) allow for, from user's perspective, a resignation from static addressing of devices and a need for distributing addresses (identifiers) of the devices before commencing any data transmission to the devices. Such approach allows for generic programming of cooperation with devices of specific, required capabilities irrespectively of current parameter values of these devices (e.g., except for the address these will be device's state, location etc.). Once programmed, cooperation algorithm will properly work in any context without a need of making any changes to it.

Such approach is especially important in case of ad-hoc interactions with unknown devices of Internet of Things - it is sufficient to be able to express which result is to be obtained and the method of obtaining this result will be established by the devices themselves in a way that would be the most efficient from system's perspective.

It is to be noted that, in contrast to all other prior art addressing methods, the device triggering a request does not have to know a physical (static) address of the other device (therefore, in a typical case the selected device may remain anonymous - which is advantageous) and triggering of the same request in a different context (for example in a different location) potentially results in activation of different devices (portability).

Hence, with a use of one solution two goals are achieved that are not feasible for current computer networks. The first is a fully dynamic addressing of Internet of Things wherein the identifiers of devices are not known a'priori (even fully anonymous before as well as after a data transmission). The second goal is a lack of necessity to re-program devices (control programs, addresses etc.) in case of adjusting context of their operation, in particular moving the device to a different location in a network.

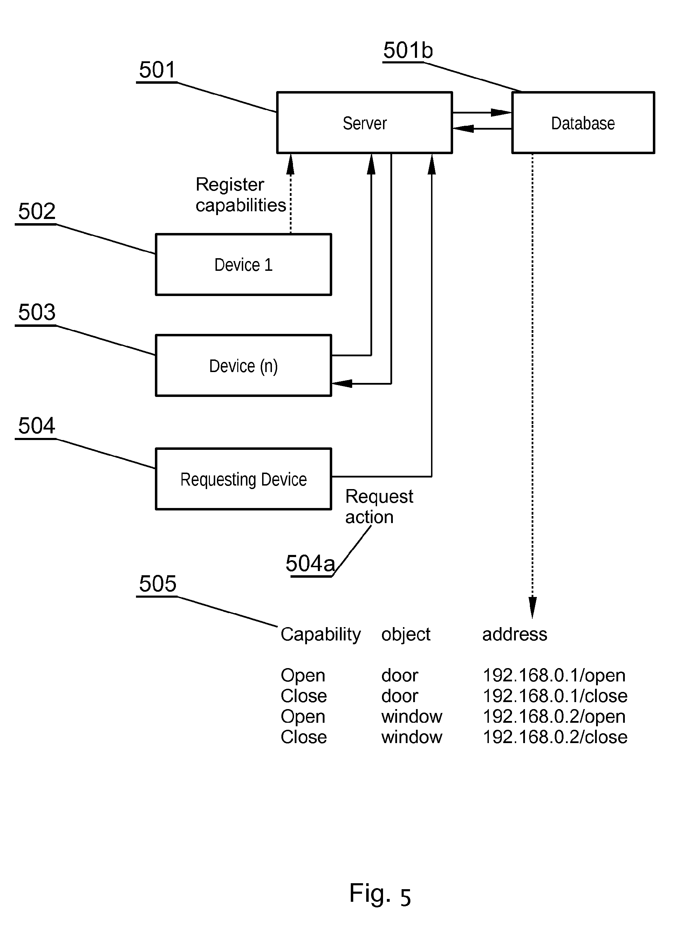

Fig. 5 presents a block diagram of a system according to the present invention. The main device of the system is a server 501, which is a central entity that processes requests from other devices. All request of device activation 504a are directed to the server 501.

The system comprises devices 502, 503. A device has an associated REST (Representational State Transfer) server and is capable of for example interacting with physical objects such as door, window, gate or similar.

The REST servers (or REST proxy servers) use for communication any available network such as TCP/IP, for example cable Ethernet, WiFi, GPRS/HSPA/LTE etc. Communication of a proxy server with a physical device depends on capabilities of the final device (door, window) and is typically effected by means of input/output controller operating a black-box. The proxy completely hides details of such communication from user's point of view and the rest of the devices of the environment.

All devices 502, 503 register themselves with the server 501 together with a semantic description of their capabilities. The devices also declare their current locations, to be inspected by the context of the requests. The server bidirectionally communicates with a database 501 a. The database holds data 505 regarding capabilities of the devices, identification of objects on which the capabilities are executed and a URL address (a call address in general terms, which in particular may be a URL address). Each capability 505 has an associated URL address (preferably an address of a REST server, which is responsible for the execution of the capability. The capabilities and their URL addresses are registered by the devices 502 - 503.

Whenever a semantically described and contextual request 505a is received at the server 501, it is compared to semantics of all previously registered devices, filtering out the devices that are compatible by their ontologies with the request. For such set of devices found, the context is taken into consideration, eliminating these devices that are not in the same location as pointed by the localization attribute of the context of the request. In case of match the server accesses the appropriate URL thereby activating the device 502-503.

The server itself does not understand the methods of requesting certain devices to execute associated capabilities. The method is coded by the device in the URL address. The server is only aware of which device to activate after a reception of certain request.

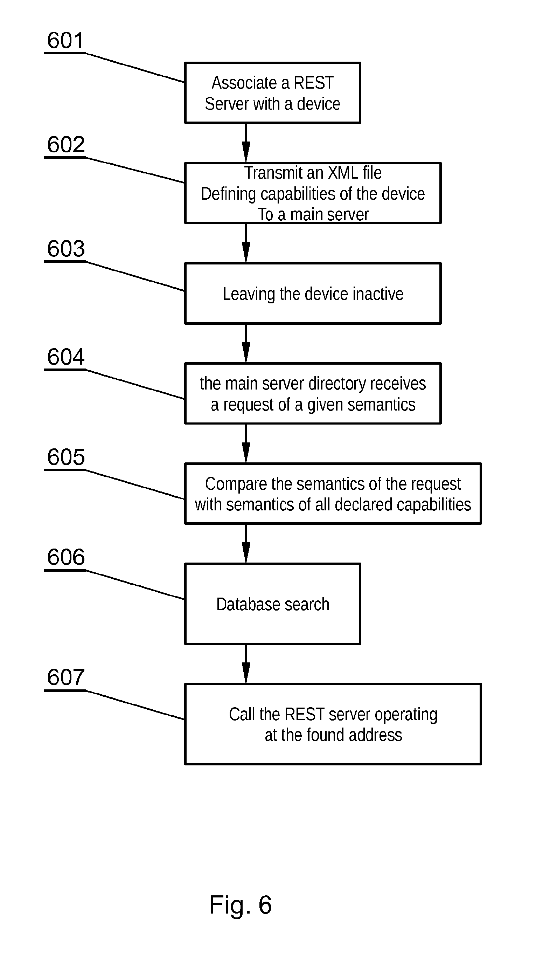

Fig. 6 presents another detailed embodiment of the present invention. The embodiment assumes that each device has a built-in REST server that controls the device. Should this not be the case, such a REST server shall be run on another device or a proxy device. In practice each controller is a micro-computer (a scale of few centimeters) having a built-in network card and dedicated input/output lines for controlling physical objects for example electric locks, electric switches or a servomotor, etc.

Preferably the REST server of a device transmits appropriately defined XML 602 file comprising a request of registering capabilities of the device associated 601 with the REST server. For example, the capabilities of the exemplary device are defined by semantics of "open window" and a call address of http://192.168.0.1/on. The request also includes context information for the device. The device itself is not activated 603, which is identified by a dashed line between the proxy and the device.

At step 604, the main server directory receives a request of a given semantics, for example "open window". Subsequently at step 605 the semantics of the request is compared with semantics of all declared capabilities. This is executed at the main server - the directory of the whole system. The server searches 606 its database 501 b, 505 for a record that fulfills the requirements of the received request. The found record shall also fulfill requirements regarding context as previously explained. If there is a match found an address is extracted from the matching record. In this case it is http://192.168.0.1/on. Thereafter, at step 607, there is a call made to the target REST server operating at the found address. The target REST server extracts from the address previously declared, the parameters of the REST call (In this example - 'on') and based on its implemented algorithm sends 608 a message to the device it operates, in the present example it is a window. For example the target REST server a message '1' (for example it sets a logical '1' on a controller's hardware line), which results in opening of the window. The target REST server subsequently sends back 609 to the main server an information about current state, preferably in a form of an XML file) as a response to the request.

The following example differs from the previous one in that a new 'on' parameter will be sent to a device, which has previously executed the 'on' action in line with the method presented in Fig. 6.

As previously, the main server directory receives a request of a given semantics, for example "open window". The server searches its database for a record that fulfills the requirements of the received request. If there is a match found an address is extracted from the matching record. In this case it is http://192.168.0.1/on. Thereafter, there is a call made to the target REST server that is operating at the found address. The target REST server extracts from the address previously declared, the parameters of the REST call (In this example - 'on'). Based on its internal algorithm, the target REST server determines that the device (window) is already in the requested state. Therefore, the target REST server does not activate the device once more establishing that it is unnecessary. The target REST server subsequently sends back to the main server information about current state, preferably in a form of an XML file) as a response to the request.

In case the main server's directory receives a request "open door" the main REST server will search the database of declared capabilities. Since the registered capabilities do not comprise the requested capability, there is not any device activated.

In another example the main server's directory receives a request "open everything". The system may assume that the semantics 'everything' is a definition of the root of the objects tree. The objects of window and door are leaves of the root (everything). In this case all declared capabilities are also searched and all devices related to a given semantics of function 'open' are called. Both door and window will be opened. Each device will be activated with a different URL address (REST call). There may be generated a collective response to the request that will contain all relevant information as a single XML file.

In yet further embodiment a request may be divided into sub-requests and delegated to certain sub-devices. A proxy server of the delegating device may revert to the directory, based on the same principle as described in details above, declaring request semantics and activating the delegated device.

It can be easily recognised, by one skilled in the art, that the aforementioned method for devices addressing within a network may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for devices addressing within a network, the method being **characterised in that** it comprises the steps of:
- defining capabilities of a target device (101), being the actions the device is able to execute, as a functions ontology;
- defining objects of real world (102), on which the actions according to capabilities may be executed, as an objects ontology;
- assigning the objects and the capabilities to the target device;
- registering the capabilities at a main server (103);
- generating a request (104) by a requesting device, wherein the request defines an object and an action to be executed on the object;
- generating context (105) information to be included as a part of the request;
- transmitting the request to the main server;
- analyzing, at the main server, whether the request matches the registered device capabilities (106) and is in line with the context;
- in case of a match, invoking the target device fulfilling the request.

2. The method according to claim 1, **characterized in that** the functions ontology comprises functions selected from a group of open, close, lock, unlock, run, execute, start, stop, increase, decrease.

3. The method according to claim 1, **characterized in that** the context information comprises information selected from a group of location, time, date, ping time, temperature, pressure, humidity.

4. The method according to claim 1, **characterized in that** the main server, the target device and the requesting device run a REST server software for controlling the operation of the respective devices.

5. The method according to claim 1, **characterized in that** the step of registering the capabilities at a main server (103) comprises storing in a database, accessible by the main server, data regarding capabilities of the target device, identification of objects on which the capabilities are executed and a call address.

6. The method according to claim 5, **characterized in that** the call address is a URL address of a REST server, which is responsible for the execution of the capability whereas the URL address is registered by the target device.

7. The method according to claim 4, **characterized in that** the exchange of data between the main server, the target device and the requesting device is effected by means of XML files.

8. A computer program comprising program code means for performing all the steps of the computer-implemented method according to any of claims 1-7 when said program is run on a computer.

9. A computer readable medium storing computer-executable instructions performing all the steps of the computer-implemented method according to any of claims 1-7 when executed on a computer.

10. A method for operating a server for devices addressing within a network, the method being **characterised in that** it comprises the steps of:
- receiving from a target device a request for registration at the server;
- registering the capabilities at the server (103) wherein the request for registration comprises;
- defining capabilities of a target device (101) that requests registration, being the actions the device is able to execute, as a functions ontology;
- defining objects of real world (102), on which the actions according to capabilities may be executed by the target device, as an objects ontology;
- receiving a request (104) from a requesting device, wherein the request defines an object and an action to be executed on the object as well as it defines context (105) information included as a part of the request;
- analyzing, at the server, whether the request matches the registered device capabilities (106) and is in line with the context;
- in case of a match, invoking the target device fulfilling the request.

11. The method according to claim 10, **characterized in that** the server runs a REST server software for controlling the operation of the server.

12. The method according to claim 10, **characterized in that** the step of registering the capabilities at a server (103) comprises storing in a database, accessible by the server, data regarding capabilities of the target device, identification of objects on which the capabilities are executed and a call address.

13. The method according to claim 12, **characterized in that** the call address is a URL address of a REST server, which is responsible for the execution of the capability whereas the URL address is registered by the target device.

14. A computer program comprising program code means for performing all the steps of the computer-implemented method according to any of claims 10-13 when said program is run on a computer.

15. A computer readable medium storing computer-executable instructions performing all the steps of the computer-implemented method according to any of claims 10-13 when executed on a computer.
